(19) Europäisches Patentamt
European Patent Office
Office européen des brevets

(11) **EP 1 656 032 B2**

(12) **NEW EUROPEAN PATENT SPECIFICATION**
After opposition procedure

(45) Date of publication and mention
of the opposition decision:
**25.01.2012 Bulletin 2012/04**

(45) Mention of the grant of the patent:
**31.01.2007 Bulletin 2007/05**

(21) Application number: **04741241.6**

(22) Date of filing: **21.07.2004**

(51) Int Cl.:
**A23G 9/00** (2006.01)    **A23G 9/20** (2006.01)

(86) International application number:
**PCT/EP2004/008253**

(87) International publication number:
**WO 2005/016023 (24.02.2005 Gazette 2005/08)**

(54) **FROZEN AERATED PRODUCTS AND METHODS FOR PREPARATION THEREOF**

GEFRORENE GESCHÄUMTE PRODUKTE UND VERFAHREN ZU IHRER HERSTELLUNG

PRODUITS SURGELES GAZEIFIES

(84) Designated Contracting States:
**AT BE BG CH CY CZ DE DK EE ES FI FR GB GR HU IE IT LI LU MC NL PL PT RO SE SI SK TR**

(30) Priority: **18.08.2003 EP 03255097**

(43) Date of publication of application:
**17.05.2006 Bulletin 2006/20**

(73) Proprietors:
• **Unilever PLC**
**London**
**Greater London EC4P 4BQ (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IT LI LU MC NL PL PT RO SE SI SK TR**

(72) Inventors:
• **BARTKOWSKA, Beata,**
**c/o Unilever R & D**
**Bedfordshire MK44 1LQ (GB)**
• **UNDERDOWN, Jeffrey,**
**c/o Unilever R & D**
**Bedfordshire MK44 1LQ (GB)**

(74) Representative: **Warner, Guy Jonathan et al**
**Unilver PLC**
**Unilever Patent Group**
**Colworth House**
**Sharnbrook**
**Bedford, Bedfordshire MK44 1LQ (GB)**

(56) References cited:
**EP-A- 0 147 483    EP-A- 1 212 948**

WO-A1-00/01246    WO-A2-98/09534
FR-A- 2 791 870

• 'Proceedings of the 2nd IDF International symposium on ice crea' ICE CREAM 2 14 May 2003 - 16 May 2003, page 140
• B. VANDERLINDEN: 'Fett & Emulgator-Symposium Solingen' ICE CREAM AND ICE CREAM COATING FATS 07 October 2002 - 08 October 2002,
• 'Edible oil & fat products: Oil and oil seeds' BAILEY'S INDUSTRIAL OIL & FAT PRODUCTS vol. 2, pages 258 - 259
• ROBERT T. MARSHALL, W.S. ARBUCKLE ICE CREAM 1996,
• ICE CREAM SHORT COURSE 03 May 1992 - 06 May 1992, PENN STATE ICE CREAM CENTENNIAL CONFERENCE,
• B. W THARPE: 'Ice Cream Proceedings of the international Symposium' BASIC FACTORS AFFECTING ICE CREAM MELT-DOWN ATHENS, GREECE, pages 54 - 64
• A. I WAN ROSNANI, I. OR AINI APPLICATION OF PALM PRODUCTS IN ICE CREAM no. 33, 2002, pages 8 - 12
• H. ROSENKOHL: 'Scheu vor Pflanzenfett ist nicht nötig' ZUCKER UND SÜSSWARENWIRTSCHAFT no. 3, 2002, pages 18 - 22
• H. ROSENKOHL: 'Influence of Recipe Parameters on Fat and Gas-Phase Structure' PROCEEDINGS OF THE 2ND IDF INTER. SYMPOSIUM ON ICE CREAM 14 May 2003 - 16 May 2003, THESSALONIKI, GREECE,
• THARPE, S. YOUNG: 'Ice cream production issues-Brief Article' DAIRY FOODS June 2000,
• H.D. GOFF: 'Colloidal Aspects of Ice Cream' INT. DAIRY JOURNAL no. 7, 1997, pages 363 - 373

EP 1 656 032 B2

- **H.D. GOFF, W.K. JORDAN: 'Action of Emulsifier in Promoting Fat Destabilisation..' JOURNAL OF DAIRY SCIENCE 72 1989, pages 18 - 29**

- **K.I. SEGALL, H.D. GOFF: 'A modified ice cream processing routine that promotes fat..' INT. DAIRY JOURNAL 12 2002, pages 1013 - 1018**

**Description**

<u>Technical Field of the Invention</u>

The invention relates to a frozen aerated product such as ice cream, wherein the fat content of the frozen aerated product comprises vegetable fat containing specified amounts of polyunsaturated and saturated fatty acids. This invention also relates to methods of preparation of such a frozen aerated product.

<u>Background of the invention</u>

Fats are triglycerides (ie they are esters of glycerol with three fatty acid moieties). The fatty acid moieties may be the same or different. The fatty acid moieties which have no double bonds are referred to herein as saturated fatty acids (SAFA), fatty acid moieties that contain one double bond are referred to herein as monounsaturated fatty acids (MUFA) and fatty acid moieties that contain two or more double bonds are referred to herein as polyunsaturated fatty acids (PUFA). The relative amounts of saturated, monounsaturated and polyunsaturated fatty acids which are present depend on the source from which the fat has been derived. Traditionally, frozen aerated products such as ice cream have been prepared with fats having a high level of saturated fatty acids, (herein referred to as saturated fats) such as those obtained from dairy products or coconut oil. Saturated fats are solid at ambient temperatures and are relatively easy to formulate into frozen aerated products. Consumers are now looking for frozen aerated products which have all the properties of these traditional products but which are more healthy for them. One concern such consumers have is that eating saturated fats increases the low density lipoproteins (LDL) in their circulation. Increased LDL levels are believed to be associated with increased risk of coronary heart disease and stroke. Replacing the saturated fats in the diet with unsaturated fats has been proposed as one way to reduce the amount of potentially harmful LDLs in the blood. It has not been possible to formulate unsaturated fats which are liquid at ambient temperatures into frozen aerated products which have the desired meltdown characteristics and which provide the desired mouthfeel for the consumer.

Japanese Patent Application 57/036944 describes the production of ice cream using an oil that is liquid at ambient temperatures using a sucrose fatty acid ester as emulsifier. The oils that are exemplified include rapeseed oil, perilla oil, water melon seed oil, sesame oil, rice oil, cotton seed oil, wheat oil, peanut oil, corn oil, soyabean oil, sunflower oil and safflower oil. These oils have a PUFA content in excess of 28%.

French Patent Application 2791870 describes ice creams in which the fat component consists essentially of olive oil. The processing procedures described in this reference produce ice creams that do not have the amounts of de-emulsified fat required by the present invention. Additionally the ice cream produced by the procedure described has poor meltdown initiation times.

In a recipe book written by the French chef, Christian Etienne called "La Magie de la Tomate" (at page 93) there is described an ice cream containing olive oil (50g), heavy cream (80ml), milk (170ml), two egg yolks and sugar (25g). The presence of dairy products (cream and milk) which are high in saturated fat in this product means that it does not have the desired health benefits.

US Patent 5478587 describes frozen desserts which comprise a non-dairy creamer which contains a partially hydrogenated oil but which can contain a partially hydrogenated vegetable oils in addition to the oil in the non-dairy creamer. There is no teaching about the amount of additional vegetable oil that is to be included. Examples of partially hydrogenated oils include canola oil (which is partially hydrogenated) and peanut and olive oils which have not been subjected to hydrogenation.

US Patent Application 2002/0034562 discloses a fat composition (which can be used inter alia to make frozen desserts and filled ice creams) which 15 to 40% by weight of linoleic acid (a polyunsaturated fatty acid) and 20 to 40% of saturated fatty acids. The fat compositions described in this reference have higher content of linoleic acid than envisaged for the present invention.

<u>Definitions</u>

<u>Vegetable fat</u>

The term "vegetable fat" used herein means a fat obtained from a plant source. Vegetable fats which are liquid at ambient temperatures are often referred to as vegetable oils. In this specification the term "vegetable fat" includes such vegetable oils

<u>Frozen Aerated Product</u>

The term "frozen aerated product" as used in this specification means a frozen product made by freezing a pasteurised mix of ingredients with agitation to incorporate air into the product.

Overrun

Overrun is defined as in Ice Cream - W.S. Arbuckle - AVI Publishing, 1972, page 194. Several ways of calculating the overrun are given in this book. In this specification overrun is measured according to the formula

$$\%\text{Overrun} = 100 \times [\text{Wt}_{mix} - \text{Wt}_{product}]/\text{Wt}_{product}$$

in which $\text{Wt}_{mix}$ is the weight of a certain volume of the mix from which the frozen product is to be prepared and $\text{Wt}_{product}$ is the weight of the same volume of the product after it has been frozen and aerated.

Meltdown initiation time

The meltdown initiation time is defined as the time that elapses before 4% of the initial weight of the sample has dropped into the collecting vessel in the experimental procedure described hereinafter.

De-emulsified fat

De-emulsified fat is known by many different names (for example destabilised fat, agglomerated fat, aggregated fat, partially coalesced fat, flocculated fat, extractable fat). It is generally believed that fat de-emulsification is responsible for establishing a three dimensional agglomeration of fat globules throughout a frozen aerated product which contributes to the structural integrity of the product. The process of de-emulsification occurs when the partially crystalline fat globules present in the mix from which the frozen aerated product is to be made undergo partial coalescence during the whipping and freezing process. The shear forces applied to the mix during aeration and freezing cause the fat globules to collide and interact, eventually leading to a fat structure to be formed that contributes greatly to the texture and meltdown properties of the product. This fat network is made up of partially coalesced fat particles that have been de-emulsified from the original mix. Measurement of the extent of fat de-emulsification therefore provides a measure of the structural integrity in the frozen aerated product.

Several methods exist to measure the amount of de-emulsified fat in ice cream. The method used herein is the so called Mastersizer technique which is described in more detail hereinafter, and has previously been described in EP 1 094 718.

Stabilisers

Stabilisers are defined as in Arbuckle, W.S., Ice Cream, 4th Edition, AVI publishing 1986, chapter 6, pages 84-92.

Emulsifiers

Emulsifiers are defined as in Arbuckle, W.S., Ice Cream, 4th Edition, AVI publishing 1986, chapter 6, pages 92-94.

Brief Description of the Invention

In accordance with a first object of the invention there is provided a frozen aerated product comprising water, 0.1 to 35 w/w% sweetener 0.05 to 1 w/w% emulsifier, milk solids non-fat in an amount of 0.25 to 20 w/w% and 2 to 20 w/w% vegetable fat component of which up to 20% by weight of the fatty acids are polyunsaturated fatty acids, less than 15% by weight of the fatty acids are linoleic acid and up to 50% by weight of the fatty acids are saturated fatty acids; said frozen aerated product being characterised in that the amount of de-emulsified fat expressed as a percentage of the total fat present in the range 30 to 60 % by weight; wherein the fat component comprises olive oil or a mixture of olive oil and coconut oil.

It has been found that the frozen aerated products of the invention have a good mouthfeel.

The lower the amount of saturated fat, the greater the health benefit.

Preferably, the frozen aerated product according to this invention is an ice cream.

In preferred embodiments of the present invention the frozen aerated product may comprise 5 to 12%, more preferably 8 to 10% fat component. The fatty acid content of vegetable fats can be found in standard reference works such as "The Lipid Handbook", Second Edition, Authors Frank D Gunstone, John L Harwood, Fred B Padley, Published by Chapman & Hall 1994 from which the data in this specification are taken unless otherwise indicated. Suitable liquid vegetable fats that may be used on their own include those listed in Table 1. The notation "(USDA)" in Table 1 indicates that the data was obtained from the United States Department of Agriculture National Nutrient Database for Standard reference. The notation "(Erasmus)" indicates that the data was obtained from Fats that heal, fats that kill, Erasmus, U., Alive Books, 1993. The notation "(FBFD)" denotes that the data was obtained from the Fat Blend Formulation Database. The exact fatty acid composition of liquid vegetable fats varies between sources and the numbers given are typically averages. Because of this, and because of rounding errors, the total MUFA + PUFA + SAFA may not be exactly 100% in every case.

Table 1

| Oil | MUFA % | PUFA % | SAFA % | Linoleic acid % |
|---|---|---|---|---|
| Olive | 79.1 | 7.9 | 13.0 | 7.3 |
| Macadamia (Erasmus) | 71 | 10 | 12 | 10 |
| Hazelnut (USDA) | 78 | 10.2 | 7.4 | 10.1 |
| High oleic sunflower | 80.6 | 10.4 | 9 | 8.4 |
| High oleic rapeseed (FBFD) | 85.1 | 6.7 | 7.4 | 2.4 |
| Avocado (USDA) | 70.5 | 13.5 | 11.5 | 12.5 |

It will be appreciated by those skilled in the art that the desired PUFA and SAFA levels may be achieved when mixing two vegetable fats when one component of the mixture has a high SAFA content and the other has a high MUFA content provided that neither of the components contributes excessive amounts of PUFA or linoleic acid. Vegetable oils having large PUFA or linoleic acid content can only be used in mixtures suitable for use in the present invention if they are present in relatively small amounts.

Examples of suitable mixtures include mixtures of olive oil (OV) and coconut oil (CNO) whose composition is 6.2% MUFA, 1.6% PUFA, 92.3% SAFA, 1.6% linoleic, and mixtures of OV and CNO in admixture with other vegetable fats for example linseed oil, rice bran oil, grape seed oil, cotton seed oil, ground nut oil, high oleic rapeseed oil or poppy seed oil. Some specific examples of such mixtures are given in Table 2 by way of example only but it will be appreciated by those skilled in the art that mixtures having different proportions of the OV, CNO and other fats could be formulated to have the desired PUFA, SAFA and linoleic acid content. It will also be appreciated that all or part of the OV, CNO or other fat identified in Table 2 could be replaced by other vegetable fats or that other vegetable fats may be added in addition to the OV, CNO and other fat identified in Table 2 to give frozen aerated products having the PUFA, SAFA and linoleic acid levels specified in the present invention.

Table 2

| OV | CNO | Other fat | MUFA | PUFA | SAFA | Linoleic acid |
|---|---|---|---|---|---|---|
| 60 | 40 | | 49 | 6 | 45 | 5.0 |
| 50 | 30 | Linseed 20 | 44 | 20 | 36 | 7.0 |
| 30 | 42 | Rice bran 28 | 38 | 14 | 48 | 13.3 |
| 50 | 34 | Grape seed 16 | 45 | 15 | 40 | 14.9 |
| 50 | 31 | Cotton seed 19 | 45 | 15 | 40 | 14.1 |
| 75 | 10 | Ground nut 15 | 66 | 12 | 22 | 11.8 |
| 35 | 32 | HO rapeseed 33 | 57 | 7 | 36 | 3.8 |
| 60 | 30 | Poppy seed 10 | 50 | 13 | 37 | 12.1 |

Table 3 gives further examples of mixtures of fats that give the required levels of PUFA, SAFA and linoleic acid. Many other combinations are possible as will be apparent to those skilled in the art.

Table 3

| Fat mixture | MUFA % | PUFA % | SAFA % | Linoleic acid % |
|---|---|---|---|---|
| Palm kernel oil 20 Avocdo oil 80 | 59 | 11 | 26 | 10.4 |
| Palm kernel oil 25 High oleic sunflower oil 60 Soya oil 15 | 55 | 16 | 28 | 13.5 |

The frozen aerated products of the present invention contain milk solids not fat (MSNF) in an amount of 0.25 to 20 %w/w. MSNF contains milk proteins and lactose. MSNF may be provided by using dried skimmed milk and/or dried whey

The sweetener of the invention is a mono-, di- or oligosaccharide, or a sugar alcohol, for example sucrose, fructose, glucose, lactose, dextrose, invert sugar and sorbitol, and can be included in the pre-mix in either crystalline or liquid syrup form. Alternatively, or additionally, the sweetener is a corn sweetener in either a crystalline form of refined corn sugar (dextrose and fructose), a dried corn syrup (corn syrup solids), a liquid corn syrup or a mixture thereof.

In the frozen aerated products of the present invention, stabilisers are preferably used. The amount of stabiliser is in the range 0 to 1 %, preferably 0.05 to 0.8%, more preferably 0.1 to 0.5% by weight of the frozen aerated product. Examples of known stabilisers include alginates, gum arabic, gum ghatti, gum karaya, gum tragacanth, locust bean gum, carrageenan, xanthan gum, guar gum, gelatine, agar, sodium carboxymethylcellulose, microcrystalline cellulose, methyl and methylethyl celluloses, hydroxypropyl and hydroxypropylmethyl celluloses, low and high methoxyl pectins and mixtures thereof. It has been found that stabilisers can improve the mouthfeel of the products.

The amount of emulsifier is preferably in the range 0.05 to 0.8 w/w% emulsifier, more preferably 0.1% to 0.5% by weight of the frozen aerated product. Examples of known emulsifiers include mono- and di-glycerides of saturated or unsaturated fatty acids (for example monoglyceryl palmitate - MGP), polyoxyethylene derivatives of hexahydric alcohols (usually sorbitol), glycols, glycol esters, polyglycerol esters, sorbitan esters, stearoyl lactylate, lactic acid esters, citric acid esters, acetylated monoglyceride, diacetyl tartaric acid esters, polyoxyethylene sorbitan esters, lecithin and egg yolk and mixtures thereof.

The amount of de-emulsified fat in the frozen aerated products of the present invention is in the range 30 to 60%. The amount of de-emulsified fat is determined using a Malvern Mastersizer model 2000 (Malvern Instruments UK).

The amount of de-emulsified fat in the frozen aerated products of the present invention was determined in the following way. The percentage of the fat present that is de-emulsified is the percentage by volume when measured by the Mastersizer method of the fat particles in the frozen aerated product that have a particle size larger than the $d(0,9)$ diameter measured on the mix from which the frozen aerated product is made before it is frozen.

In order to ensure that the measurement is only of the fat droplet size distribution, any milk protein micelles must be broken down before the measurements are taken. A solution of urea (to disintegrate casein micelles by disrupting hydrophobic bonds) and sodium dodecyl sulphate (SDS) (to displace protein at the oil/water interface and to dissociate the micelles) is used. The solution used in the method that is described herein is prepared by adding urea (198.2g 98% - Sigma U5378) to water (around 250ml) and stirring for twenty minutes. SDS (0.5g - Prod 44244 from BDH Chemical Ltd) is added and the volume made up to 500ml with water. The mixture is stirred until clear (around 10 minutes). The resulting solution is referred to herein as "the urea/SDS solution".

To determine the fat droplet size distribution in the mix from which the frozen aerated product is made before it is frozen, a sample (10ml) of the cooled, homogenised and pasteurised mix is added to the urea/SDS solution (20ml) in a 50ml glass beaker. The mixture is stirred for 15 minutes at 20°C. The resulting mixture is added dropwise by pipette to the large bath of the Mastersizer 2000 machine to an obscuration of 10-15% and the integral ultrasound is applied at 100% power for one minute. The machine measures the particle size distribution and determines the fat droplet diameter $d(0,9)$ below which the diameters of 90% by volume of the fat droplets are found.

To determine the fat droplet size distribution in the frozen aerated product after it has been frozen, a sample (20ml) is taken from the centre of the frozen aerated product using a cork borer having a diameter of 18mm. The sample is added to the urea/SDS solution (20ml) in a 50ml glass beaker. The mixture is stirred for 15 minutes at 20°C. The resulting mixture is added dropwise by pipette to the large bath of the Mastersizer 2000 machine to an obscuration of 10-15% and the integral ultrasound is applied at 100% power for one minute. The machine measures the particle size distribution and determines the percentage volume of fat particles with a size greater than the $d(0,9)$ value obtained for the unfrozen mix above. This is the percentage of de-emulsified fat reported herein. According to this definition, the percentage of de-emulsified fat for the unfrozen mix is 10%. Consequently, and allowing for experimental error (which is typically a few percent), values of the de-emulsified fat from frozen products of less than 20% are considered to show that the frozen product does not contain significantly more de-emulsified fat than the unfrozen mix. Values greater than 20% are considered to show that the frozen product does contain significantly more de-emulsified fat than the unfrozen mix.

It has been found that amounts of de-emulsified fat in these ranges produce products with good mouthfeel.

The frozen aerated products of the present invention preferably show resistance to meltdown and to serum leakage for extended periods of time on exposure to a temperature above the melting point of the product. Resistance to meltdown and to serum leakage is determined by measuring the meltdown initiation time as described hereinafter. The frozen aerated products of the present invention satisfy the condition that the meltdown initiation time is greater than 25 minutes, preferably greater than 40 minutes, more preferably greater than 45 minutes when measured at 20°C in the test described below.

The meltdown initiation times were determined in the following way. Tests were performed on a stainless steel wire mesh grid having a size of 25 x 25 cm, with 2.5 mm holes, 1mm thick wire. The grids are placed on a 60° funnel with a bore size of 2cm suspended over a collecting vessel (of large enough volume to collect the entire sample tested) placed on balances for weighing the material collected in the vessel. The balances are connected to a data logging system to record the mass collected. The grids were placed in a meltdown cabinet set at a constant temperature environment of 20 °C, which was capable of holding up to 12 of these grids simultaneously.

For each formulation listed hereinafter in the examples, melting tests were performed on three samples of each product at 20 °C. Each sample was in the form of a rectangular block measuring 14.5 x 9 x 3.8cm and was placed on the grid with one of its larger flat faces in contact with the grid. Before placement in the cabinet the ice cream samples were equilibrated in a freezer at - 25 °C, and then weighed on a zeroed balance containing the mesh grid. They were then arranged randomly over the available positions in the meltdown cabinet. Once all samples were in place, the data logging system measured the amount of collected material every minute.

From the mass of the sample collected over this period, the percentage mass loss of the samples is calculated using the following formula.

$$\%MassLoss = \frac{M_t - M_0}{F} \times 100$$

wherein:

$M_t$ = mass recorded on the balance (gram) at time t minute
$M_0$ = mass recorded on the balance(gram) at start of analysis,
t = 0 minute
F = Initial mass of product (gram)

The meltdown initiation time for each sample of each formulation was observed. This is defined by the time that elapses before 4% of the initial weight of the sample has dropped into the collecting vessel.

Preferably the frozen aerated products of the present invention have an overrun of between 10% and 250%, more preferably between 50% and 150%, most preferably between 80% and 110%. Products with overruns in these ranges are particularly acceptable to consumers.

In accordance with a second aspect of the present invention there is provided a process for manufacturing a frozen aerated product comprising:-

water,
2 to 20 w/w% vegetable fat component,
0.1 to 35 w/w% sweetener, 0.05 to 1 w/w% emulsifier, milk solids non fat in an amount of 0.25 to 20 w/w%.

the process comprising the steps of:

a)producing a premix comprising (i) water, (ii) a vegetable fat component in which up to 20% by weight of the fatty acids in the fat component are polyunsaturated fatty acids; in which less than 15% by weight of the fatty acids in the fat component is linoleic acid; and in which up to 50% by weight of the fatty acids in the fat component are saturated fatty acids and wherein the ratio of the weight of saturated fatty acids to the weight of monounsaturated fatty acids in the fat component lies in the range 0.05 to 0.5 (iii) sweetener, (iv) emulsifier and (v) milk solids non fat
b) homogenising and pasteurising the premix
c) cooling the pasteurised premix to a temperature below 0°C and keeping the temperature below 0°C for at least two hours, and
d) freezing and aerating the homogenised premix to form the frozen aerated product.

It has been found that products prepared according to this process have a good mouthfeel.

Preferably emulsifiers are included in the range 0.1 to 0.5% w/w. Preferably stabilisers are included in the range 0 to 1% w/w.

This process is particularly applicable to the manufacture of frozen aerated products in which 2 to 20%, preferably 3 to 17.5% by weight of the fatty acids in the fat component are polyunsaturated fatty acids and 5 to 50%, preferably 7 to 45% by weight of the fatty acids in the fat component are saturated fatty acids.

Conveniently the premix may be produced by mixing the other ingredients and the sweetener and then adding the fat component.

The processes of this invention includes the step of homogenising and pasteurising the mix. The mix may be homogenised using equipment and conditions commonly known in the industry for example a single or double stage valve homogeniser. Pasteurisation of the homogenised mix can be conducted using any method and condition that is well known to a person skilled in this field for example high temperature short time (HTST) or low temperature long time (LTLT) pasteurisation. In a preferred homogenising and pasteurising step according to the processes of the present invention the temperature of the premix is raised to the pasteurisation temperature, the premix is homogenised and then held at the pasteurisation temperature for sufficient time to complete the pasteurisation.

After homogenisation and pasteurisation the mix is preferably held at a temperature below 0°C for a period between 2 and 72 hours preferably with agitation. More preferably the mix is held at a temperature around -2°C with agitation for 2 to 48 hours, or most preferably for 4 to 24 hours. It has been found that including this step in the process produces products which have improved mouthfeel.

The mix is then frozen and aerated. This may be achieved in any equipment suitable for this purpose and commonly known in the industry. One of ordinary skill in the art will readily be able to determine the required aeration pressure and throughput rate of the mix to obtain the desired aerated product.

The conditions of aeration are chosen to achieve an overrun of about 10% to about 250%. Preferably the overrun for the preferred ice cream products is between 50% and 150%, more preferably 60% and 120% and most preferably between 80% and 110%.

The aerated mix is then extruded, preferably directly, into containers, hardened at a temperature of, for example, -35°C and stored in a commercial freezer at a temperature of, for example, -25°C.

Detailed Description of the Invention

Examples of the products of the invention and comparative examples will now be described by way of illustration only, and not to limit the invention.

The PUFA, SAFA and linoleic content given in the Examples are taken from data given in "The Lipid Handbook", Second Edition, Authors Frank D Gunstone, John L Harwood, Fred B Padley, Published by Chapman & Hall 1994.

Examples 1 and 2

Formulations containing the components listed in Table 4 were prepared by the method described below.

Water was placed in a jacketed mix tank at 85°C, then skimmed milk powder, whey, locust bean gum, guar gum, carrageenan, emulsifier, sucrose, corn syrup and the olive oil and (if present) coconut oil were dissolved by mixing with a high shear mixer. Hot water was circulated in the jacket of the tank to maintain a premix temperature of 65°C.

The premix was heated using a plate heat exchanger to a temperature of 83°C, homogenised using a the first stage of a Crepaco double stage valve homogeniser at pressures of 140 bar. After holding the mix at 82 to 85°C for 12.1 seconds, the mix was cooled using a tubular heat exchanger to -2°C and held at this temperature for at least 24 hours before freezing. The colour and flavour were added to the cooled mix.

The mix was processed through a continuous ice cream freezer (type APV Technohoy MF75) fitted with an open dasher rotating at a speed of 300-500 rpm and operating with a barrel pressure in the range 1-4 bar. The products were produced with a mix flow rate of 0.4 1/min, with an overrun of 100% and an extrusion temperature in the range -6°C to -8°C. The frozen aerated products were collected in 500 ml waxed paper cartons and then hardened in a blast freezer at -35°C for a period of 2 hours. The hardened products were then stored at -25°C.

The de-emulsified fat content and the meltdown initiation time at 20°C given in Table 4 were determined by the methods described previously.

Table 4

|  | Example 1 | Example 2 |
|---|---|---|
| Skimmed Milk Powder | 4.12 | 4.12 |
| Whey Powder Concentrate | 3.24 | 3.24 |

(continued)

|  | Example 1 | Example 2 |
|---|---|---|
| Olive Oil | 9.0 | 5.4 |
| Coconut Oil |  | 3.6 |
| Sucrose | 11.5 | 11.5 |
| Low Fructose corn syrup | 11.66 | 11.66 |
| MGP | 0.3 | 0.3 |
| Locust Bean Gum | 0.145 | 0.145 |
| Guar Gum | 0.0625 | 0.0625 |
| Kappa Carrageenan | 0.0175 | 0.0175 |
| Vanilla Flavour | 0.171 | 0.171 |
| Colour (30% beta-carotene) | 0.14 | 0.14 |
| Water | to 100 | to 100 |
|  |  |  |
| % PUFA | 7.9 | 5.3 |
| % SAFA | 13.0 | 44.7 |
| % linoleic acid | 7.3 | 5.0 |
| SAFA:MUFA ratio | 0.16 | 0.9 |
|  |  |  |
| % de-emulsified fat | 50 | 34 |
| Meltdown Initiation Time at 20°C (min) | 46 | 35 |

Comparative Example

Formulations containing the components listed in Table 5 as disclosed in the example in FR 2791870 were prepared by the method described below.

Water was placed in a jacketed mix tank at 85°C, then skimmed milk powder, whey protein, sucrose, glucose, olive oil, maltodextrin and oligofructose were dissolved by mixing with a high shear mixer. Hot water was circulated in the jacket of the tank to maintain a premix temperature of 65°C.

The premix was heated using a plate heat exchanger to a temperature of 83°C, homogenised using the first stage of a Crepaco double stage valve homogeniser at pressures of 140 bar.

After holding the mix at 82 to 85°C for 12.1 seconds, the mix was cooled using a tubular heat exchanger to 2°C and held at this temperature for 8 hours before freezing.

The mix was processed through a continuous ice cream freezer (type APV Technohoy MF75) fitted with an open dasher rotating at a speed of 300-500 rpm and operating with a barrel pressure in the range 1-4 bar. The products were produced with a mix flow rate of 0.4 1/min, with an overrun of 100% and an extrusion temperature in the range -5°C to -9°C. The frozen aerated products were collected in 500 ml waxed paper cartons and then hardened in a blast freezer at -35°C for a period of 2 hours. The hardened products were then stored at -25°C.

The de-emulsified fat content and the meltdown initiation time at 20°C given in Table 5 were determined as described previously.

Table 5

|  |  |
|---|---|
| Skimmed Milk Powder | 12.55 |
| Whey protein | 1.25 |
| Olive Oil | 7.0 |

(continued)

| Sucrose | 10 |
|---|---|
| Glucose | 6 |
| Maltodextrin | 2 |
| Oligofructose | 5 |
| Water | to 100 |
| | |
| % de-emulsified fat | 3 |
| Meltdown Initiation Time at 20°C (min) | 7 |

The above formulation had a de-emulsified fat content of 3% and gave a meltdown initiation time of 7 minutes at 20°C. These values do not give a quality ice cream.

**Claims**

1. A frozen aerated product comprising water, 0.1 to 35 w/w% sweetener, 0.05 to 1 w/w% emulsifier, milk solids non fat in an amount of 0.25 to 20 w/w% and 2 to 20 w/w% vegetable fat component of which up to 20% by weight of the fatty acids are polyunsaturated fatty acids, less than 15% by weight of the fatty acids are linoleic acids and up to 50% by weight of the fatty acids are saturated fatty acids; said frozen aerated product being **characterised in that** the amount of de-emulsified fat expressed as a percentage of the total fat present is in the range 30 to 60% by weight; wherein the fat component comprises olive oil or a mixture of olive oil and coconut oil.

2. A frozen aerated product as claimed in claim 1 wherein the olive oil comprises at least 60% by weight of the fat component.

3. A frozen aerated product as claimed in claim 1 wherein the fat component comprises a mixture of olive oil and coconut oil in admixture with another vegetable fat.

4. A frozen aerated product as claimed in claim 3 wherein the another vegetable oil is selected from the group consisting of linseed oil, rice bran oil, grape seed oil, cotton seed oil, ground nut oil, high oleic rapeseed oil or poppy seed oil.

5. A process for manufacturing a frozen aerated product comprising:-

   water,
   2 to 20 w/w% vegetable fat component,
   0.1 to 35 w/w% sweetener, 0.05 to 1 w/w% emulsifier, milk solids nonfat in an amount of 0.25 to 20 w/w%

   the process comprising the steps of:

   a) producing a premix comprising (i) water, (ii) a vegetable fat component in which up to 20% by weight of the fatty acids in the fat component are polyunsaturated fatty acids; in which less than 15% by weight of the fatty acids in the fat component is linoleic acid; and in which up to 50% by weight of the fatty acids in the fat component are saturated fatty acids and wherein the ratio of the weight of saturated fatty acids to the weight of monounsaturated fatty acids in the fat component lies in the range 0.05 to 0.5, (iii) sweetener, (iv) emulsifier and (v) milk solids non fat
   b) homogenising and pasteurising the premix
   c) cooling the pasteurised premix to a temperature below 0°C and keeping the temperature below 0°C for at least two hours, and
   d) freezing and aerating the homogenised premix to form the frozen aerated product.

6. A process according to claim 5 wherein the frozen aerated product comprises 0 to 1 w/w% stabiliser and 0.1 to 0.5 w/w% emulsifier.

**7.** A process according to claim 6 wherein the saturated fatty acids comprise 7 to 45% by weight of the fatty acids in the fat component.

**8.** A process according to claim 5 or 7 wherein the cooled premix is held at below 0°C for a period of between 2 and 72 hours before freezing.

**9.** A process according to claim 5 or 7 wherein the cooled premix is held at around -2°C for a period of between 2 and 48 hours before freezing.

**10.** A process according to claim 5 or 7 wherein the cooled premix is held at around -2°C for a period of between 4 and 24 hours before freezing.

**Patentansprüche**

**1.** Gefrorenes, belüftetes Produkt, umfassend Wasser, 0,1 bis 35 Gew./Gew.-% Süßstoff, 0,05 bis 1 Gew./Gew.-% Emulgator, Milch-Feststoffe nicht fett in einer Menge von 0,25 bis 20 Gew./Gew.-% und 2 bis 20 Gew./Gew.-% Pflanzenfettbestandteil, von welchem bis zu 20 % nach Gewicht der Fettsäuren mehrfach ungesättigte Fettsäuren sind, weniger als 15 % nach Gewicht der Fettsäuren Linolsäure sind und bis zu 50 % nach Gewicht der Fettsäuren gesättigte Fettsäuren sind; wobei besagtes gefrorenes, belüftetes Produkt **dadurch gekennzeichnet ist, dass** die Menge an deemulgiertem Fett, ausgedrückt als ein Prozentsatz des gesamten vorhandenen Fetts, im Bereich von 30 bis 60 % nach Gewicht ist, wobei der Fettbestandteil Olivenöl oder eine Mischung von Olivenöl und Kokosnußöl umfaßt.

**2.** Gefrorenes, belüftetes Produkt, wie in Anspruch 1 beansprucht, worin das Olivenöl mindestens 60 % nach Gewicht des Fettbestandteils umfasst.

**3.** Gefrorenes, belüftetes Produkt, wie in Anspruch 1 beansprucht, worin der Fettbestandteil ein Gemisch aus Olivenöl und Kokosöl in Vermischung mit einem weiteren Pflanzenfett umfasst.

**4.** Gefrorenes, belüftetes Produkt, wie in Anspruch 3 beansprucht, worin das weitere Pflanzenöl ausgewählt wird aus der Gruppe bestehend aus Leinöl, Reisöl, Traubenkernöl, Baumwollsamenöl, Erdnussöl, ölsäurereichem Rapsöl oder Mohnsahmenöl.

**5.** Verfahren zum Herstellen eines gefrorenen, belüfteten Produkts, umfassend:

Wasser,
2 bis 20 Gew./Gew.-% Pflanzenfettbestandteil 0,1 bis 35 Gew./Gew.-% Süßstoff, 0,05 bis 1 Gew./Gew.-% Emulgator, Milch-Feststoffe nicht fett in einer Menge von 0,25 bis 20 Gew./Gew.-%,

das Verfahren umfassend die Schritte:

a) Herstellen eines Vorgemisches, umfassend (i) Wasser, (ii) einen Pflanzenfettbestandteil, in welchem bis zu 20 % nach Gewicht der Fettsäuren in dem Fettbestandteil mehrfach ungesättigte Fettsäuren sind, in welchem weniger als 15 % nach Gewicht der Fettsäuren in dem Fettbestandteil Linolsäure ist, und in welchem bis zu 50 % nach Gewicht der Fettsäuren in dem Fettbestandteil gesättigte Fettsäuren sind, und wobei das Verhältnis des Gewichts der gesättigten Fettsäuren zu dem Gewicht der mono-ungesattigten Fettsäuren in dem Fettbestandteil im Bereich von 0,05 bis 0,5 liegt, (iii) Süßstoff, (iv) Emulgator und (v) Milch-Feststoffe nicht fett
b) Homogenisieren und Pasteurisieren des Vorgemisches
c) Kühlen des pasteurisierten Vorgemisches auf eine Temperatur unter 0°C und Halten der Temperatur unter 0°C für mindestens zwei Stunden, und
d) Gefrieren und Belüften des homogenisierten Vorgemisches, um das gefrorene, belüftete Produkt zu bilden.

**6.** Verfahren gemäß Anspruch 5, worin das gefrorene, belüftete Produkt 0 bis 1 Gew./Gew.-% Stabilisator und 0,1 bis 0,5 Gew./Gew.-% Emulgator umfasst.

**7.** Verfahren gemäß Anspruch 6, worin die gesättigten Fettsäuren 7 bis 45 % nach Gewicht der Fettsäuren in dem Fettbestandteil umfassen.

**8.** Verfahren gemäß Anspruch 5 oder 7, worin das gekühlte Vorgemisch bei unter 0°C für einen Zeitraum von zwischen 2 und 72 Stunden vor dem Gefrieren gehalten wird.

**9.** Verfahren gemäß Anspruch 5 oder 7, worin das gekühlte Vorgemisch bei etwa -2°C für einen Zeitraum von zwischen 2 und 48 Stunden vor dem Gefrieren gehalten wird.

**10.** Verfahren gemäß Anspruch 5 oder 7, worin das gekühlte Vorgemisch bei etwa -2°C für einen Zeitraum von zwischen 4 und 24 Stunden vor dem Gefrieren gehalten wird.

**Revendications**

**1.** Produit aéré, congelé, comprenant de l'eau, de 0,1 à 35 % p/p d'édulcorant, de 0,05 à 1 % p/p d'émulsifiant, de 0,25 à 20 % p/p de matières sèches dégraissées du lait et de 2 à 20 % p/p d'un composant de matière grasse végétale dont jusqu'à 20 % en poids des acides gras sont des acides gras polyinsaturés, moins de 15 % en poids des acides gras sont de l'acide linoléique et jusqu'à 50 % en poids des acides gras sont des acides gras saturés ; ledit produit aéré, congelé étant **caractérisé en ce que** la quantité de matière grasse ayant subi une désémulsification exprimée en tant que pourcentage de la totalité de la matière grasse présente est comprise dans la plage allant de 30 à 60 % en poids ; le composant de matière grasse comprenant de l'huile d'olive ou un mélange d'huile d'olive et d'huile de noix de coco.

**2.** Produit aéré, congelé, selon la revendication 1, dans lequel l'huile d'olive comprend au moins 60 % en poids du composant de matière grasse.

**3.** Produit aéré, congelé, selon la revendication 1, dans lequel le composant de matière grasse comprend un mélange d'huile d'olive et d'huile de noix de coco en mélange avec une autre matière grasse végétale.

**4.** Produit aéré, congelé, selon la revendication 3, dans lequel l'autre huile végétale est choisie dans le groupe constitué par l'huile de lin, l'huile de riz, l'huile de pépin de raisin, l'huile de coton, l'huile d'arachide, l'huile de colza à forte teneur en acide oléique ou l'huile de pavot.

**5.** Procédé de fabrication d'un produit aéré, congelé, comprenant :

✓ de l'eau,
✓ de 2 à 20 % p/p de composant de matière grasse végétale,
✓ de 0,1 à 35 % p/p d'édulcorant, de 0,05 à 1 % p/p d'émulsifiant, et de 0,25 à 20 % p/p de matières sèches dégraissées du lait ;

le procédé comprenant les étapes consistant à :

a) produire un pré-mélange comprenant (i) de l'eau, (ii) un composant de matière grasse végétale dans lequel jusqu'à 20 % en poids des acides gras dans le composant de matière grasse sont des acides gras poly-insaturés ; dans lequel moins de 15 % en poids des acides gras dans le composant de matière grasse sont de l'acide linoléique ; et dans lequel jusqu'à 50 % en poids des acides gras dans le composant de matière grasse sont des acides gras saturés; et dans lequel le rapport du poids des acides gras saturés au poids des acides gras mono-insaturés dans le composant de manière grasse est compris dans la plage allant de 0,05 à 0,5, (iii) un édulcorant, (iv) un émulsifiant et (v) des matières sèches dégraissées du lait,
b) homogénéiser et pasteuriser le pré-mélange,
c) refroidir le pré-mélange pasteurisé à une température inférieure à 0°C et garder la température inférieure à 0°C pendant au moins 2 heures, et
d) congeler et aérer le pré-mélange homogénéisé pour former le produit aéré, congelé.

**6.** Procédé selon la revendication 5, dans lequel le produit aéré, congelé, comprend de 0 à 1 % p/p de stabilisant et de 0,1 à 0,5 % p/p d'émulsifiant.

**7.** Procédé selon la revendication 6, dans lequel les acides gras saturés constituent de 7 à 45 % en poids des acides gras dans le composant de matière grasse.

8.  Procédé selon la revendication 5 ou 7, dans lequel le pré-mélange refroidi est maintenu à moins de 0°C pendant une période comprise entre 2 et 72 heures avant congélation.

9.  Procédé selon la revendication 5 ou 7, dans lequel le pré-mélange refroidi est maintenu à environ -2°C pendant une période comprise entre 2 et 48 heures avant congélation.

10. Procédé selon la revendication 5 ou 7, dans lequel le pré-mélange refroidi est maintenu à environ -2°C pendant une période comprise entre 4 et 24 heures avant congélation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57036944 A
- FR 2791870
- US 5478587 A
- US 20020034562 A
- EP 1094718 A

**Non-patent literature cited in the description**

- **Arbuckle, W.S.** *Ice Cream, 4th Edition,* 1986, 84-92
- **Arbuckle, W.S.** *Ice Cream, 4th Edition,* 1986, 92-94